# EUROPEAN PATENT APPLICATION

(11) **EP 1 667 436 A2**
(43) Date of publication of application: **07.06.2006**
(21) Application number: 05026377.1
(22) Date of filing: 02.12.2005
(51) Int. Cl.: H04N 5/225

(54) **Method for controlling privacy mask display**

(30) Priority: 03.12.2004 KR 2004100776
(71) Applicant: LG Electronics, Inc., Seoul 150-010 (KR)
(72) Inventor: Seo, Sung Ha 504-1904, Unam Apt., Yongin-si Gyeonggi-do, 448-535 (KR); Kang, Kyun Ho 109-906, Hyundai Apt., 472, Gyeongsangnam-do 660-320 (KR); Lee, Gang Sik, Suwon-si Gyeonggi-do, 442-150 (KR); Kim, Mang Sung, Suwon-si Gyeonggi-do 443-400 (KR); Park, Byung Jin, Yongsan-gu Seoul, 140-211 (KR)
(74) Representative: Vossius & Partner

(57) **Abstract**

A method for controlling a privacy mask display. If a monitoring camera performs a panning operation such that a privacy mask overlapped with a monitored image frame should be shifted, a current tilt angle is recognized. The privacy mask can be differently shifted for the same panning operation according to the recognized current tilt angle, for example, on the basis of different privacy mask shift values for different tilt angles. Therefore, embodiments of methods and apparatus can prevent a specific or designated object displayed in the monitored image frame from being exposed to others because of pan/tilt operations (Fig. 1).

## Description

The present invention relates to a method and apparatus for controlling a monitoring device, and more particularly to a method and apparatus for controlling a privacy mask display for a monitoring device.

In recent times, a DVR (Digital Video Recorder) has been made commercially available and placed onto the market. A monitoring camera, such as the DVR, is installed at a specific location at which security is required, captures an image of an object to be monitored (hereafter referred to as a monitored image), and records the captured image in the DVR. However, the monitored image captured by the above-mentioned monitoring camera may include facial images of unspecified people, which can result in the occurrence of an invasion of privacy of people.

In order to protect the privacy of unspecified people from being exposed to others via the above-mentioned monitored image, there has been recently proposed a method for displaying a privacy mask (also called a masking block), such as a mosaic image, to be overlapped with the monitored image. Thus, a privacy mask capable of covering only a target object, the privacy of which is required to be protected, is overlapped with the monitored image, and the resultant image is displayed.

However, as described above, the related art method and apparatus for displaying a privacy mask with a monitored image have various disadvantages. For example, errors in positioning the privacy mask can again result in the occurrence of an invasion of privacy.

The above references are incorporated by reference herein where appropriate for appropriate teachings of additional or alternative details, features and/or technical background.

An object of the invention is to solve at least the above problems and/or disadvantages and to provide at least the advantages described hereinafter.

Another object of the present invention to provide a method and apparatus for adjusting a position of a privacy mask for a monitoring device that can solve at least the above problems and/or disadvantages and to provide at least the advantages described hereinafter.

Another object of the present invention to provide a method and apparatus for adjusting a position of a privacy mask for a monitoring device that can differently move the privacy mask overlapped with a monitoring image frame according to a current tilt angle when the device pans.

Another object of the present invention to provide a method and apparatus for adjusting a position of a privacy mask according to pan/tilt operations of a monitoring camera.

In accordance with one aspect of the present invention, at least the above and other objects can be accomplished in a whole or in part by a method for controlling a mask display that includes detecting a rotation operation in a panning direction of a monitoring camera, recognizing a tilt angle of the monitoring camera for the rotation operation and differently shifting a mask overlapped with an image frame according to the recognized tilt angle.

In accordance with another aspect of the present invention, when a tilt angle is shifted from 0° to 90°, a movement displacement of a privacy mask in association with a rotation operation of the same angle in the panning direction can be adjusted.

In accordance with another aspect of the present invention, there is provided a method for controlling a mask display that includes recognizing a tilt angle of a monitoring camera when rotation of the monitoring camera is detected in a panning direction, compensating for a rotation angle of the panning direction according to the recognized tilt angle and shifting a mask overlapped with an image frame according to the compensated rotation angle of the panning direction.

In accordance with another aspect of the present invention, there is provided an apparatus for controlling a privacy mask display for a monitoring device that includes a monitoring camera configured to perform monitoring by pan and tilt operations, a privacy mask generator configured to generate a privacy mask for a requested position and a controller coupled to the monitoring camera and the mask generator and configured to detect the monitoring camera rotation operation in a panning direction, recognize a tilt angle of the monitoring camera for the rotation operation and differently shift the privacy mask overlapped with an image frame according to the recognized tilt angle.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

FIG. 1 is a diagram illustrating panning and tilting operations of a related art monitoring camera using a pan/tilter;

FIG. 2 is a block diagram illustrating a pan/tilter and a monitoring camera to which embodiments of the invention can be applied;

FIG. 3 is a diagram that shows Cartesian coordinates of a pan/tilter for displaying a privacy mask;

FIGS. 4~5 are diagrams that show exemplary errors in movements of a privacy mask shifted by a panning operation;

FIG. 6 shows a graph illustrating privacy mask shift values managed by a monitoring camera in accordance with a preferred embodiment of the present invention;

FIG. 7 is a flow chart illustrating a method for controlling a privacy mask display in accordance with a preferred embodiment of the present invention;

FIG. 8 is a diagram that shows exemplary movement of a privacy mask shifted by a panning operation of the monitoring camera in accordance with a preferred embodiment of the present invention;

FIG. 9 shows a graph illustrating compensation values managed by a pan/tilter in accordance with another preferred embodiment of the present invention; and

FIG. 10 is a flow chart illustrating a method for controlling a privacy mask display in accordance with another preferred embodiment of the present invention.

### DETAILED DESCRIPTION OF PREFERRED EMBODIMENTS

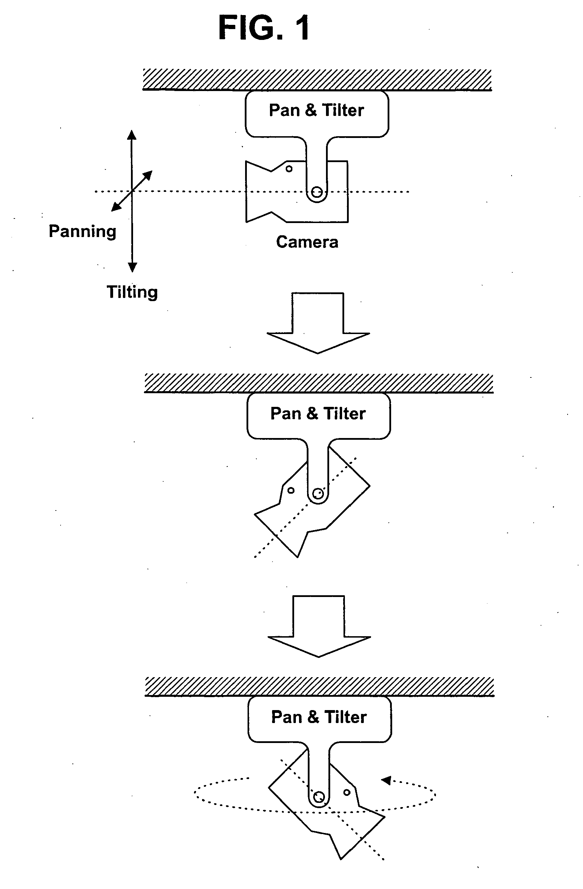

FIG. 1 is a conceptual diagram illustrating panning and tilting operations of a related art monitoring camera using a pan/tilter. For example, a PTZ monitoring camera capable of performing panning, tilting, and zooming functions may be included in a pan/tilter installed at the ceiling of a specific location to be monitored.

The monitoring camera can shift its monitoring area by a panning operation (e.g., horizontal rotation) and a tilting operation (e.g., vertical rotation) of the pan/tilter. The monitoring camera includes a zoom lens, such that it zooms in on an image of a target object, or zooms out from the image of the target object using the zoom lens.

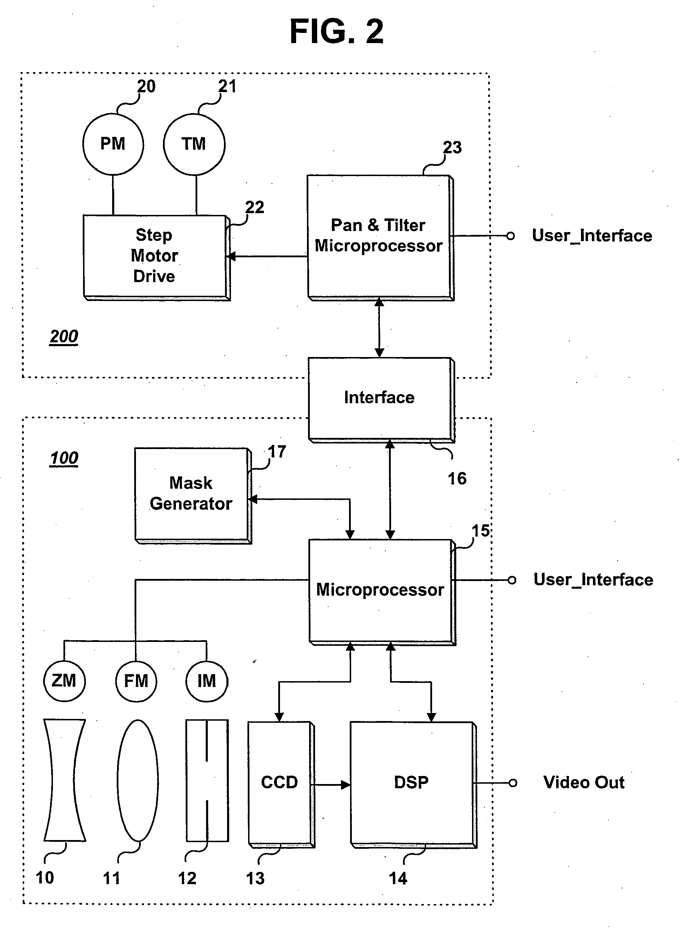

As shown in FIG. 2, a monitoring camera 100 can include a zoom lens 10, a focus lens 11, an iris 12, a CCD (Charge Coupled Device) 13, a digital signal processor (DSP) 14, a microprocessor 15, an interface unit 16, and a mask generator 17, etc. A pan/tilter unit 200 can include a pan motor 20, a tilt motor 21, a step-motor drive 22, a pan/tilter microprocessor 23, etc.

A step motor or the like can be applied to each of the pan motor 20 and the tilt motor 21. The pan/tilter microprocessor 23 can control the step-motor drive 22 to rotate the pan motor 20 and the tilt motor 21, such that an attitude of the monitoring camera establishes a pickup angle desired by a user. In this case, the pan/tilter microprocessor 23 can count the number of rotation steps of the pan motor and the tilt motor to respectively detect a horizontal rotation angle in a panning direction and a vertical rotation angle in a tilting direction.

The microprocessor 15 of the monitoring camera can control operations of the mask generator 17 upon receiving a request from the user, and display a predetermined-sized privacy mask (PM) to be overlapped at a predetermined position contained in the captured image to protect (e.g., control) a specific object, the privacy of which should be protected, from being exposed in the captured image.

If the monitoring camera 100 performs the panning or tilting operation at different angles using the pan/tilter unit 200, the pan/tilter microprocessor 23 counts the number of rotation steps of the pan motor and the tilt monitor, and transmits a pan/tilt control value corresponding to the counted number of rotation steps to the monitoring camera 100.

The microprocessor 15 of the monitoring camera 100 can receive the pan/tilt control value from the pan/tilter microprocessor 23, calculate a current pan/tilter angle on the basis of the received pan/tilt control value, and adjust a position of the privacy mask overlapped with the monitored image frame, so that it prevents a specific object, which should be privacy protected, from being exposed in the monitored image during the pan/tilt operation.

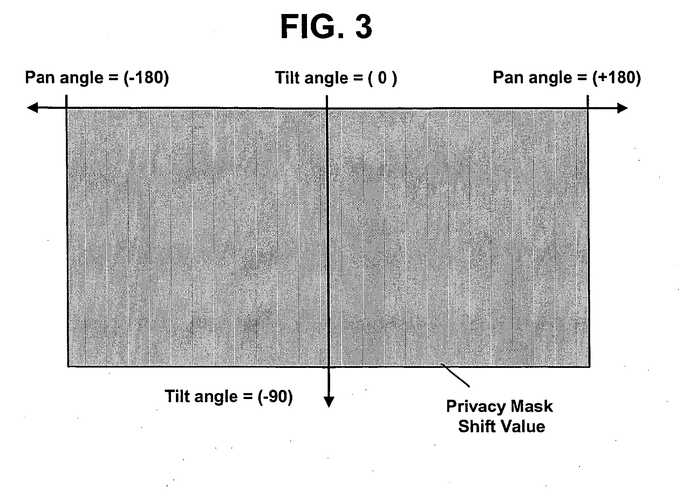

However, a problem can occur when the microprocessor 15 of the monitoring camera 100 moves the privacy mask on the basis of Cartesian coordinates of the pan/tilt angle as shown in FIG. 3. Since a CCD image formed when the monitoring camera 100 captures an object moves on the basis of spherical coordinates of the pan/tilt, an actual movement displacement of the image is changes according to a current tilt angle although the image rotates by the same angle in the panning direction.

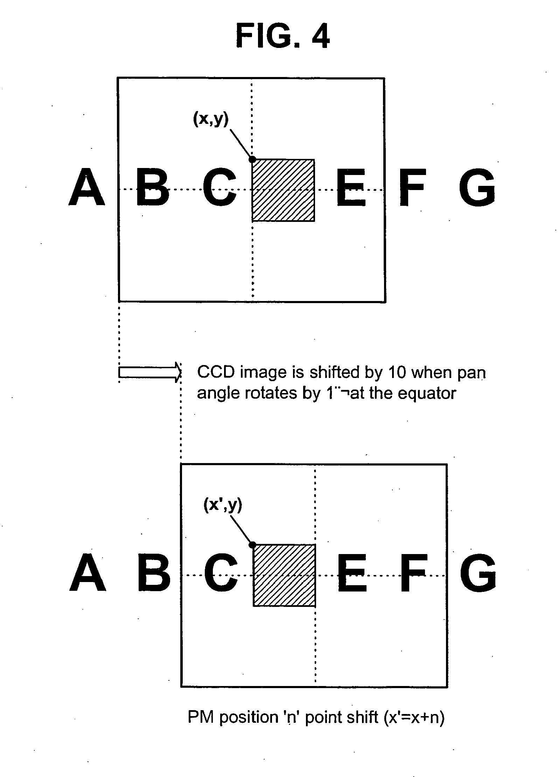

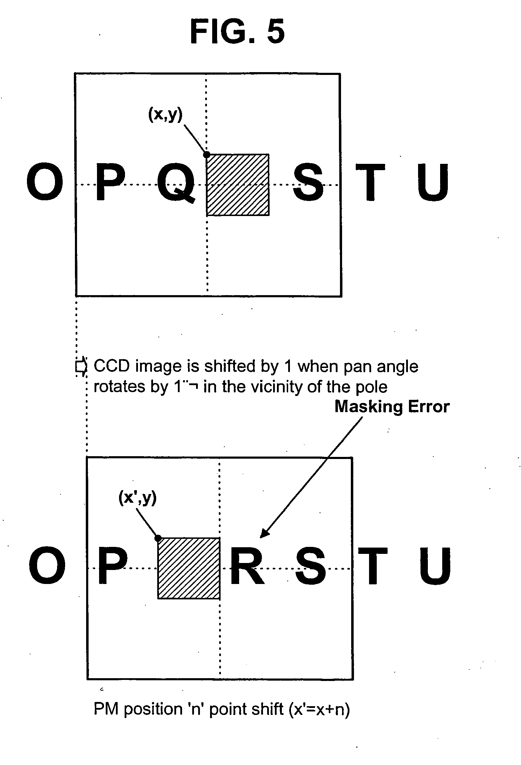

For example, as shown in FIG. 4, if the monitoring camera 100 captures a first object at the equator having a tilt angle of zero, and at the same time rotates by a predetermined angle of 1° in the panning direction, the first object image formed in the CCD shifts by a predetermined value of 10 in a horizontal direction. As shown in FIG. 5, if the monitoring camera 100 captures a second object in the vicinity of a tilt angle of -60°, and at the same time rotates by a predetermined degree of 1° in the panning direction, the second object image formed in the CCD moves by a predetermined value of about 5. In other words, although the moving camera performs the panning operation by the same angle, the closer the tilt angle is to a predetermined angle of about -90° (e.g., the higher the tilt angle), the smaller the movement displacement of the object image.

Thus, a problem occurs when a monitoring camera adjusts a position of the privacy mask on the basis of the Cartesian coordinates of the pan/tilt angle irrespective of a current tilt angle. Therefore, if the movement displacement of the privacy mask is adjusted on the basis of the equator, the movement displacement of the image is different from that of the privacy mask at a predetermined position in the vicinity of the pole, and a masking error that exposes a specific object (e.g., a character "R") occurs as shown in FIG. 5.

Embodiments of methods for controlling a privacy mask display according to the invention can be applied to and will be described using the monitoring camera 100 installed in the pan/tilter as shown in FIG. 2. However, the invention is not intended to be so limited.

In accordance with a first embodiment of the present invention, a privacy mask shift value, which should be shifted when the monitoring camera rotates by 1 degree in the panning direction, can be stored in a nonvolatile memory (not shown) contained in the monitoring camera. If the panning operation occurs, the privacy mask overlapped in the monitored image frame can shift on the basis of the panning operation.

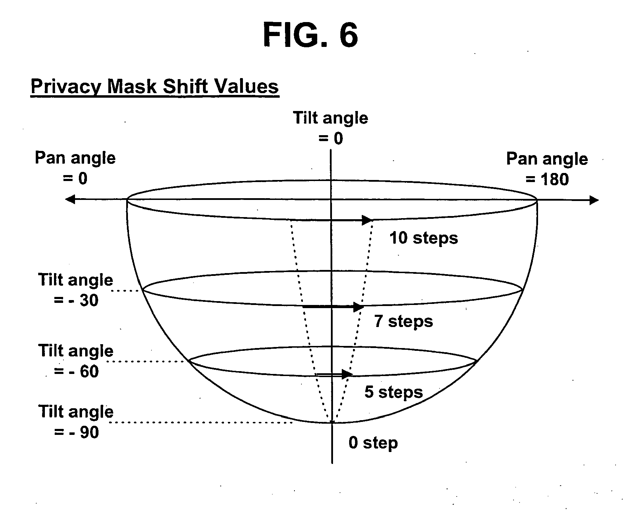

As shown in FIG. 6, it is preferred that the closer the tilt angle is to the pole having a tilt angle of -90° from the equator having a tilt angle of zero, the less the privacy mask shift value corresponding to the panning of the same angle. For example, assuming that the privacy mask shift value is 10 when the tilt angle is zero, it can be a predetermined number of 7 when the tilt angle is -30 degrees, a predetermined number of 5 when the tilt angle is -60 degrees, and zero when the tilt angle is -90 degrees.

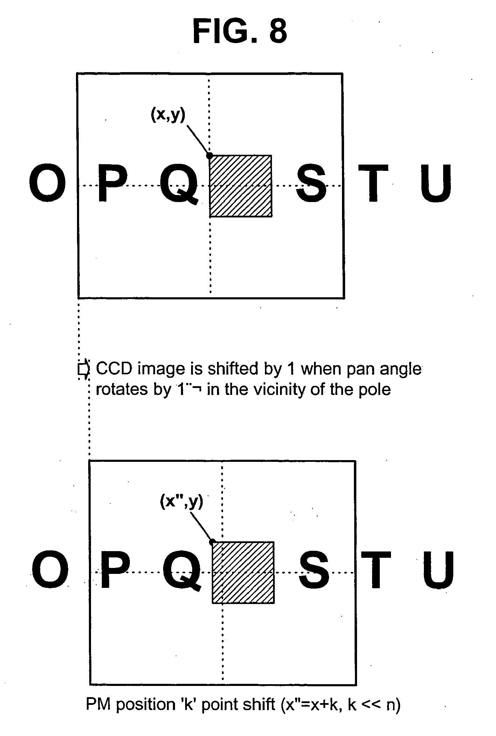

As shown in FIG. 4, the microprocessor 15 of the monitoring camera can shift the privacy mask by a predetermined point of "n" when the monitoring camera pans by 1 degree at a tilt angle equal to the equator. According to embodiments of the invention, as shown in FIG. 8, if the microprocessor 15 shifts the privacy mask by a predetermined point of "k" less than the point of "n" when the monitoring camera pans by 1 degree at a tilt angle adjacent to the pole, a specific object to be protected by the privacy mask can be prevented from being exposed to others (e.g., have a reduced likelihood of exposure).

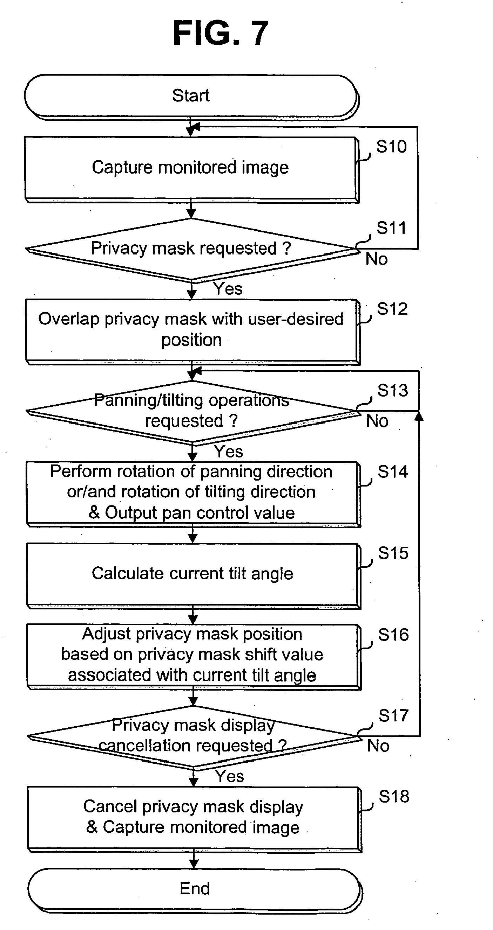

FIG. 7 is a flow chart illustrating a method for controlling a privacy mask display in accordance with an embodiment of the present invention. As shown in Fig. 7, a monitoring camera can capture a monitored image (block S10).

Upon receiving a request (e.g., from a user) for a privacy mask display operation (e.g., to prevent a specific object from being exposed) for a monitored image frame (block S11), the microprocessor 15 can control operations of the mask generator 17, such that a privacy mask image overlaps with the monitored image at a selected (e.g., user-desired) position (x,y) (block S12).

Upon receiving a request (e.g., from a user) for a panning operation and/or a tilting operation (block S13), a pan/tilter microprocessor 23 can rotate the pan motor 20 and the tilt motor 21, count the number of rotation steps of the pan motor and the tilt motor, and transmit a pan/tilt control value corresponding to the counted result to the microprocessor 15 of the monitoring camera (block S14).

Upon receiving a pan/tilt control value from the pan/tilter microprocessor 23, the microprocessor 15 of the monitoring camera can calculate a current tilt angle of the monitoring camera on the basis of the pan/tilt control value (block S15).

The microprocessor 15 of the monitoring camera can read a privacy mask shift value corresponding to the calculated current tilt angle from among a plurality of privacy mask shift values, which can be stored in the monitoring camera and managed by the same monitoring camera. The microprocessor 15 can adjust a position of the privacy mask overlapped with the monitored image frame on the basis of the read privacy mask shift value (block S16). For example, if a pan angle is shifted by 1 degree at a tilt angle of about 90°, the privacy mask is preferably shifted by a predetermined point of "k" (where, k<<n) less than the point of "n", where "n" is equal to the privacy mask shift value at a predetermined angle in the vicinity of the equator, and the shifted privacy mask is displayed. Therefore, a specific object (i.e., the character "R" in FIG. 8) displayed in the monitored image frame can remain hidden during the pan/tilt operation.

When the privacy mask display function is cancelled (e.g., by a user request) (block S17), the microprocessor 15 of the monitoring camera can control operations of the mask generator 17 such that the privacy mask is not overlapped with the monitored image frame (block S18). Then, operations for capturing the monitored image can be performed. Otherwise, processes can be selectively repeated (block S17).

In accordance with a second embodiment of the invention, in the case of providing the monitoring camera with a pan/tilt control value, the pan/tilter can use a pseudo pan control value instead of an actual pan control value as the pan/tilt control value. The pseudo pan control value can be transmitted to the monitoring camera.

In this case, the pseudo pan control value can be stored in and managed by a nonvolatile memory contained in the pan/tilter, and is preferably compensated by a compensation value of each tilt angle. The monitoring camera can shift the privacy mask overlapped with the monitored image frame on the basis of the pseudo pan control value.

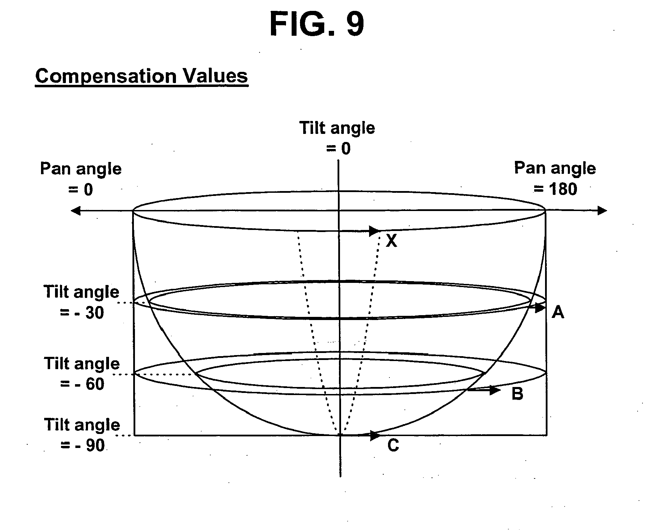

FIG. 9 shows a graph illustrating compensation values managed by the pan/tilter in accordance with another embodiment of the present invention. As shown in FIG. 9, the closer the tilt angle is to a predetermined angle of about -90° from the equator having a tilt angle of zero, the higher the compensation values A, B, and C.

For example, the pseudo pan control value (instead of the pan control value of X) transmitted to the monitoring camera when the pan angle rotates 1 degree can be a predetermined value of X, from which a compensation value of zero can be deducted, if the tilt angle is zero. If the tilt angle is -30°, the pseudo pan control value can be a predetermined value of X-A (e.g., a compensation value of A is deducted from the value of X). If the tilt angle is -60°, the pseudo pan control value can be a predetermined value of X-B (e.g., a compensation value of B is deducted from the value of X). If the tilt angle is -90°, the pseudo pan control value can be a predetermined value of X-C (e.g., a compensation value of C is deducted from the value of X). Preferably, the closer the tilt angle is to the pole, the less the pseudo pan control value.

When the pan motor rotates, the pan/tilter microprocessor 23 can count the number of rotation steps of the pan motor, and calculate a pan control value corresponding to the counted result and a current tilt angle. For example, the pan/tilter microprocessor 23 can read a compensation value for the current tilt angle (e.g., managed by the memory), calculate a pseudo pan control value by subtracting the read compensation value from the pan control value, and transmit the pseudo pan control value to the monitoring camera. The pseudo pan control value can be reduced as the current tilt angle gets closer to the pole having a tilt angle of -90° from the equator having a tilt angle of zero.

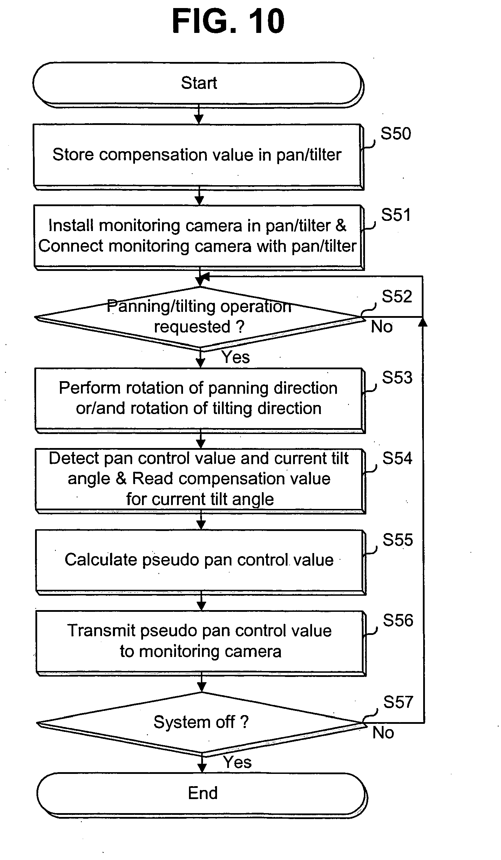

FIG. 10 is a flow chart illustrating a method for controlling a privacy mask display in accordance with another preferred embodiment of the present invention. A shown in FIG. 10, a compensation value (e.g., as shown in FIG. 9) for each tilt angle can be stored in the pan/tilter 200 (block S50). The monitoring camera 100 can be installed in the pan/tilter 200, such that the pan/tilter is connected to the monitoring camera 100 (block S51).

Upon receiving a request for a panning operation and/or a tilting operation from the user (block S52), the pan/tilter microprocessor 23 can rotate the pan motor 20 and/or the tilt motor 21 (block S53). The pan/tilter microprocessor 23 can count the number of rotation steps of the pan motor 20 and the tilt motor 21, calculate a pan control value corresponding to the counted result and a current tilt angle, and read a compensation value corresponding to the current tilt angle from among a plurality of compensation values for individual tilt angles (block S54).

The pan/tilter microprocessor 23 can calculate a pseudo pan control value (e.g., by subtracting the calculated pan control value from the read compensation value) (block S55). For example, as shown in FIG. 9, the closer the tilt angle is to the pole having a tilt angle of -90° from the equator having a tilt angle of zero, the higher the compensation value. Therefore, the closer the tilt angle is to the pole, the lower the pseudo pan control value transmitted to the monitoring camera.

The pan/tilter microprocessor 23 can transmit the above-described pseudo pan control value to the monitoring camera 100 (block S56), and repeatedly perform the above-mentioned operations until a system is switched off (block S57).

Therefore, the microprocessor 15 of the monitoring camera can adjust a display position of the privacy mask on the basis of the pseudo pan control value transmitted by the pan/tilter microprocessor 23. The privacy mask can shift by a relatively long distance when the tilt angle is positioned at the equator (e.g., horizontally). Otherwise, the privacy mask can shift by a relatively short distance when the tilt angle is positioned at the pole (e.g., vertically).

In accordance with the second embodiment, the privacy mask shift value described in the first embodiment can be stored as the above-described compensation value. In order to set the value of the privacy mask shift value (PMSV_0) to a predetermined number (e.g., 1) at a tilt angle of zero, the privacy mask shift value associated with each tilt angle can be divided by the value of PMSV_0, and the division result can be stored as a compensation value for each tilt angle in the memory contained in the pan/tilter. The pan/tilter microprocessor 23 can calculate a pan control value (e.g., by counting the number of rotation steps of a pan motor), and combine (e.g., multiply) the compensation value of a corresponding tilt angle by the calculated pan control value to determine a pseudo pan control value. The pan/tilter microprocessor 23 may transmit the pseudo pan control value to the monitoring camera.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

As described above, embodiments of a method and apparatus for controlling a privacy mask display have various advantages. For example, embodiments of a method and apparatus for controlling a privacy mask display can effectively block a specific object displayed in a monitored image frame from being exposed to others because of pan/tilt operations.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for controlling a mask display, comprising:
detecting a rotation operation in a panning direction of a monitoring camera;
recognizing a tilt angle of the monitoring camera for the rotation operation; and
differently shifting a mask overlapped with an image frame according to the recognized tilt angle.

2. The method of claim 1, wherein the mask overlapped with the image frame is differently shifted for the identical rotational operation according the recognized tilt angle.

3. The method of claim 1 or 2, wherein when the tilt angle is shifted from 0° to 90°, a movement displacement of the mask in association with a rotation operation of the same angle in the panning direction is reduced.

4. The method of any of claims 1 to 3, wherein a shift value of an image contained in the image frame formed by rotation of a predetermined angle in the panning direction is pre-stored in association with individual tilt angles spaced apart from each other by a prescribed value, and wherein a mask movement displacement associated with the rotation in the panning direction is determined on the basis of the shift value.

5. The method of claim 4, wherein the individual tilt angles include a plurality of tilt angles from 0° to 90°, and wherein the shift value is based on one degree of movement in the panning direction.

6. The method of claim 1, wherein the mask overlapped with the image frame is differently shifted for the identical rotational operation by compensating for a rotation angle of the panning direction according to the recognized tilt angle.

7. The method of claim 6, wherein a compensation value for the rotation angle increases when the tilt angle is shifted from 0° to 90°.

8. The method of any of claims 1 to 7, comprising:
receiving a request for generating the mask; and
overlapping the image frame with the generated mask at a user requested position.

9. A method for controlling a mask display, comprising:
recognizing a tilt angle of a monitoring camera when rotation of the monitoring camera is detected in a panning direction;
compensating for a rotation angle of the panning direction according to the recognized tilt angle; and
shifting a mask overlapped with an image frame according to the compensated rotation angle of the panning direction.

10. The method of claim 9, wherein when the monitoring camera rotates by the same angle in the panning direction, the compensated rotation angle is gradually reduced in a predetermined range from 0° to 90° of the tilt angle.

11. The method of claim 9 or 10, wherein a rotation angle compensation value in the panning direction is pre-stored in association with individual tilt angles spaced apart from each other by a predetermined value, and the rotation angle in the panning direction is compensated for on the basis of the compensation value.

12. The method of claim 11, wherein the individual tilt angles include a plurality of tilt angles from 0° to 90°.

13. The method of any of claims 9 to 12, wherein the mask overlapped with the image frame is differently shifted for the identical rotational operation according the recognized tilt angle.

14. The method of claim 13, wherein when the tilt angle is shifted from 0° to 90°, a movement displacement of the mask in association with a rotation operation of the same angle in the panning direction is reduced.

15. The method of any of claims 9 to 14, comprising:
receiving a request for generating the mask; and
overlapping the image frame with the generated mask at a user requested position.

16. An apparatus for controlling a privacy mask display for a monitoring device, comprising:
a monitoring camera configured to perform monitoring by pan and tilt operations;
a privacy mask generator configured to generate a privacy mask for a requested position; and
a controller coupled to the monitoring camera and the mask generator and configured to detect the monitoring camera rotation operation in a panning direction, recognize a tilt angle of the monitoring camera for the rotation operation and differently shift the privacy mask overlapped with an image frame according to the recognized tilt angle.

17. The apparatus of claim 16, wherein when the monitoring camera rotates by the same angle in the panning direction, the shift value of the privacy mask is gradually reduced when the tilt angle increases from 0° to 90°

18. The apparatus of claim 16 or 17, wherein the mask overlapped with the image frame is differently shifted by compensating for a rotation angle of the panning direction according to the recognized tilt angle.
